# EUROPEAN PATENT APPLICATION

(11) **EP 4 545 458 A1**
(43) Date of publication of application: **30.04.2025**
(21) Application number: 24208964.7
(22) Date of filing: 25.10.2024
(51) Int. Cl.: B65H 19/10, B65H 19/18, B65H 20/34, B65H 23/04

(54) **SPLICING APPARATUS FOR SPLICING MATERIAL WEBS FOR THE PRODUCTION OF POWER STORAGE DEVICES, MACHINE COMPRISING THE SPLICING APPARATUS AND RELATIVE SPLICING METHOD**

(30) Priority: 27.10.2023 IT 202300022611
(71) Applicant: Manz Italy S.r.l., 40037 Sasso Marconi (BO) (IT)
(72) Inventor: ANDERLINI, Enrico, 40037 SASSO MARCONI (BO) (IT); POLGA, Lorenzo, 40037 SASSO MARCONI (BO) (IT); VITTOSO, Nunzio, 40037 SASSO MARCONI (BO) (IT); SALE, Massimiliano, 40037 SASSO MARCONI (BO) (IT); CECCARANI, Jacopo, 40037 SASSO MARCONI (BO) (IT); PEPE, Eugenio, 40037 SASSO MARCONI (BO) (IT)
(74) Representative: Studio Torta S.p.A.

(57) **Abstract**

A splicing apparatus (1) for splicing two material webs (N1, N2) for the production of power storage devices provided with a splicing assembly (C1) comprising: at least two feeding units (W1, W2), each configured to feed a respective material web (N1, N2); and a splicing unit (2) configured to splice the two webs (N1, N2) by means of an adhesive tape (T) applied on one of the two webs (N1, N2). The splicing unit (2) comprises a movable deflecting element (3) configured to move along a splicing surface defined by the two material webs to be spliced and is movable between a disengagement position, in which the deflecting element (3) is spaced apart from the first material web, and a transfer position, in which the deflecting element (3) at least partially engages the first material web (N1) so as to at least partially stretch it when the web (N1) is released onto the second feeding unit (W2).

## Description

### CROSS-REFERENCE TO RELATED APPLICATIONS

This patent application claims priority from Italian patent application no. 102023000022611 filed on October 27, 2023, the entire disclosure of which is incorporated herein by reference.

### TECHNICAL FIELD

The present invention relates to a splicing apparatus for splicing material webs for the production of power storage devices, to a machine comprising the splicing apparatus and to a relative splicing method.

In particular, the present invention is advantageously, but not exclusively, applied to the management of material coils for the production of cylindrical power storage devices (such as, for example, cylindrical rechargeable batteries or cylindrical capacitors) to which the following description will explicitly refer without thereby losing generality, planar or prismatic power storage devices, for which what described and claimed in the following remains valid.

More in particular, the present invention is also advantageously, but not exclusively, applied to the arrangement of an adhesive tape (also called "label") for the splicing of the webs for the production of power storage devices, such as for example separator or electrode webs, upstream of the splicing of the two material webs.

### PRIOR ART

The production of rechargeable batteries generally provides for the superposition of different layers of electrodes (with positive and negative polarity - cathode and anode) interspersed by a separator layer, adapted to avoid possible short circuits and in particular to be impregnated with an electrolyte, so as to form a usually cylindrical winding, also called "Jelly Roll", or a usually prismatic stack.

In recent years, several machines have been developed for the production of power storage devices. In these machines, each electrode web and each separator web are unwound from a coil so as to be subsequently machined, cut and stacked or wound by means of a winding apparatus for obtaining a winding.

However, when a material coil (whether electrode or separator) currently in use is about to finish, it is necessary to provide for its replacement.

To expedite the coil change, the known machines usually comprise two unwinding spindles for each layer of material, so that, while the coil currently in use is ending, a new coil is already provided with which to perform a splicing.

In particular, the splicing is usually performed by an operator, who approaches the flap of the coil in use to that of the new coil on a plate, subsequently applying the adhesive tape (label) along the splicing.

It is evident that this type of splicing is not feasible in high-productivity machines.

Moreover, the manual application carried out by the operator upstream of the actual splicing results to be not very accurate. In other words, the positioning (both in terms of orientation and position) of the adhesive tape (label) is not replicable over time. In fact, though willing, the operator will never be able to apply all the labels with the same orientation and with the same position on different coils. The variability of the positioning of the adhesive tape thus also makes the subsequent steps of processing the web, such as for example the splicing, more complex. In fact, before making the splicing of the two webs, the machine must check the orientation and the actual position of the adhesive tape, compare it with the orientation and the theoretical position (i.e. the one correlated with its "expected" positioning) and perform the due adjustments.

### DESCRIPTION OF THE INVENTION

The object of the present invention is to provide a splicing apparatus for splicing material webs for the production of power storage devices, a machine comprising the splicing apparatus and a relative splicing method which are at least partially devoid of the drawbacks of the state of the art and which are effective and cost-effective to manufacture.

According to the present invention, a splicing apparatus for splicing material for the production of power storage devices, a machine comprising the splicing apparatus and a method for the production of power storage devices are provided according to what is claimed in the following independent claims and, preferably, in any one of the claims directly or indirectly dependent on the independent claims.

The claims describe preferred embodiments of the present invention forming integral part of the present description.

### BRIEF DESCRIPTION OF THE DRAWINGS

The present invention will now be described with reference to the accompanying drawings, which illustrate some non-limiting example embodiments thereof, wherein:
- Figure 1 is a schematic perspective view (with some parts removed for clarity) of a splicing apparatus;
- Figures 2A-2G are schematic views, with parts removed for clarity, of a first embodiment of an application assembly for applying the adhesive tape of the splicing apparatus during some steps of the sequence of operations carried out by the apparatus;
- Figures 3A-3H are schematic views, with parts removed for clarity, of a second embodiment of the application assembly for applying the adhesive tape during some steps of the sequence of operations carried out by the apparatus;
- Figures 4A-4C are schematic views, with parts removed for clarity, of some steps of the sequence of operations carried out by a splicing assembly of the splicing apparatus, which receives the material web from the application apparatus for applying the adhesive tape illustrated in Figures 2A-2G; and
- Figures 5A-5D are schematic views, with parts removed for clarity, of some steps of the sequence of operations carried out by the splicing assembly of the splicing apparatus, which receives the material web from the application apparatus for applying the adhesive tape illustrated in Figures 3A-3H.

### PREFERRED EMBODIMENTS OF THE INVENTION

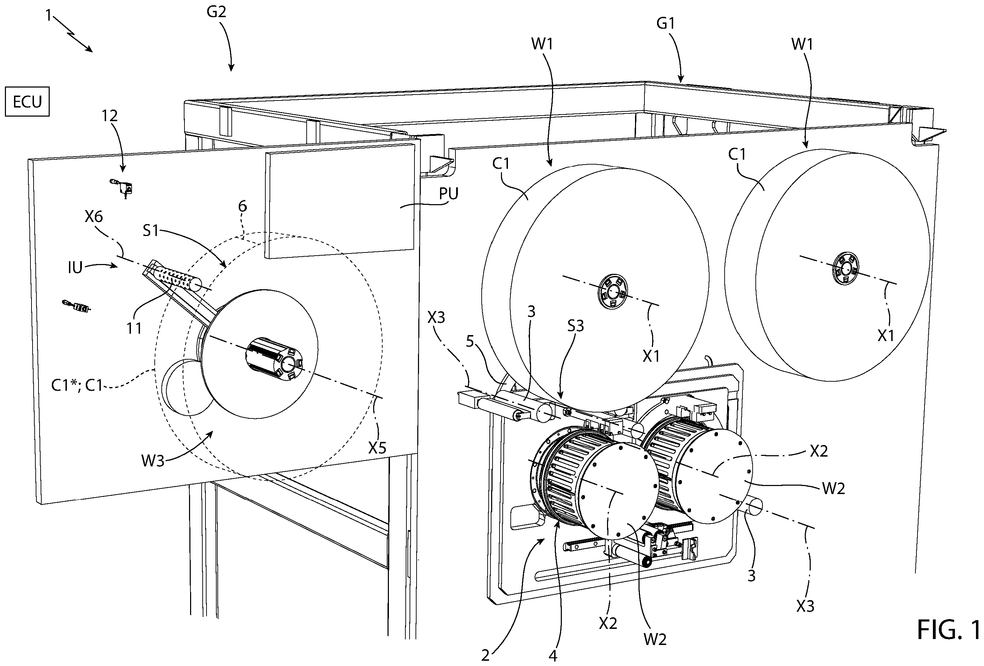

In Figure 1, reference numeral 1 indicates, as a whole, a splicing apparatus, in particular automated, for splicing a material web N1 for the production of power storage devices collected from a coil C1 with a material web N2 collected from a coil C2.

In the following discussion, explicit reference will be made to the general term "material web" or "coil". The term "material web" or "coil" means a seamless web-shaped material neatly wound around a core. The invention described in the following is advantageously applied to material coils C1, C1* or C2 for manufacturing power storage devices, which are composed of a multi-component material and comprises at least one electrode web (preferably two electrode webs) and at least one separator web (preferably two separator webs) for electrodes (which are of known type and thus are not described in detail in the following).

In some non-limiting cases, the coils C1, C1* or C2 are electrode (anode or cathode) coils comprising a barefoil (usually made of aluminium or copper, which acts as current collector) and a slurry of active materials, usually in the form of compressed powder (different for each electrode, for example comprising graphite or cobalt and lithium).

Alternatively or additionally, the coils C1, C1* or C2 are separator coils, i.e. consist of the material usually interposed between the electrodes composing the electrochemical cell. In particular, the separator is of polymer type (possibly with some ceramic layers) and will not be further described in detail in the following.

In the following discussion, reference will also be explicitly made to an "adhesive tape". The adhesive tape T is defined by a piece of adhesive tape (which has a non-adhesive side and an adhesive side) configured to splice the two webs N1 and N2. Therefore, in the following discussion, the term "adhesive tape" means a piece of web-shaped material provided with an adhesive surface.

Advantageously, but not limitedly, the splicing apparatus 1 is arranged close to or preferably adjacent the machine for the production of power storage devices. In particular, the apparatus 1 is the part upstream of the machine for the production of power storage devices.

The splicing apparatus 1 comprises a splicing assembly G1 configured to splice (namely join) the two material webs N1 and N2 and an application assembly G2 (optional) configured to apply an adhesive tape T on one of the webs (preferably on the material web N1). In other words, the splicing apparatus 1 comprises only the splicing assembly G1 (alternative not illustrated) or comprises both assemblies G1 and G2 (alternative schematically illustrated in Figure 1). In particular, in the latter case, the application assembly G2 is arranged close to, in particular upstream of, the splicing assembly G1, so as to receive the coil C1* with the adhesive tape T applied on it.

According to the embodiment, the splicing apparatus 1 comprises only the splicing assembly G1, which is manufactured according to what is described in the following. The splicing assembly G1 comprises at least two feeding units W1 and W2, each configured to feed a respective material web N1 or N2 and a splicing unit 2. In particular, Figure 1 illustrates four feeding units W1 and W2, namely two units W1 and two units W2.

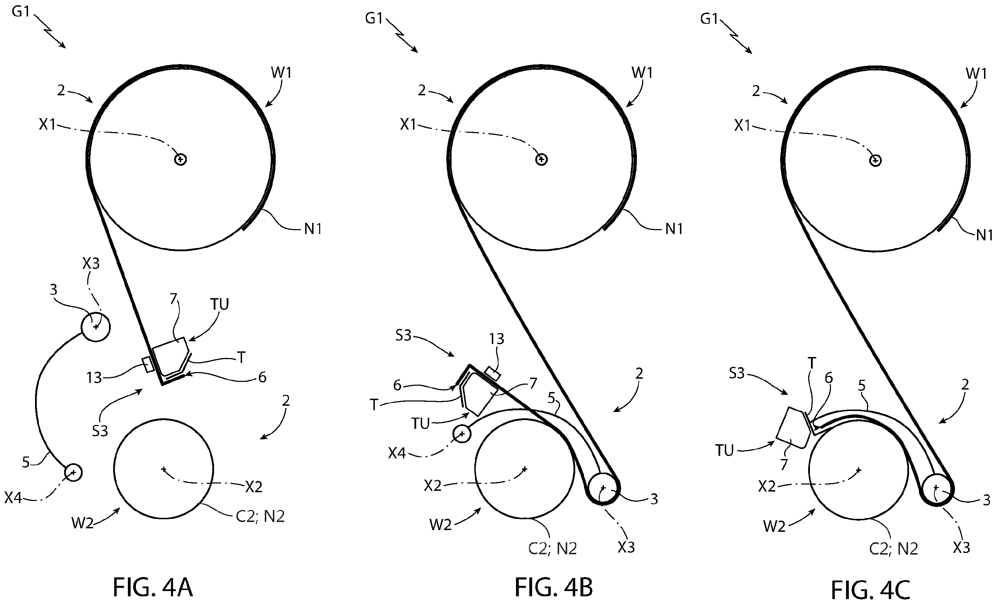

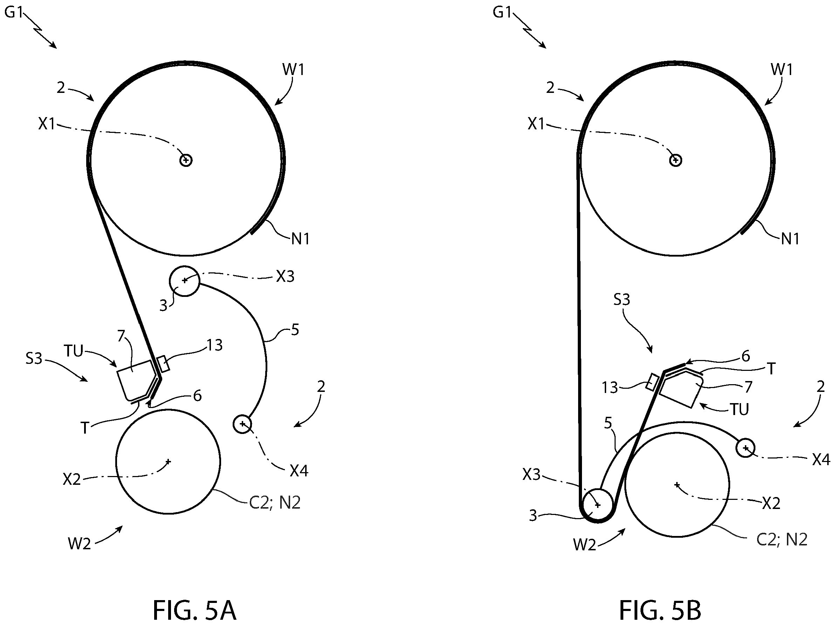

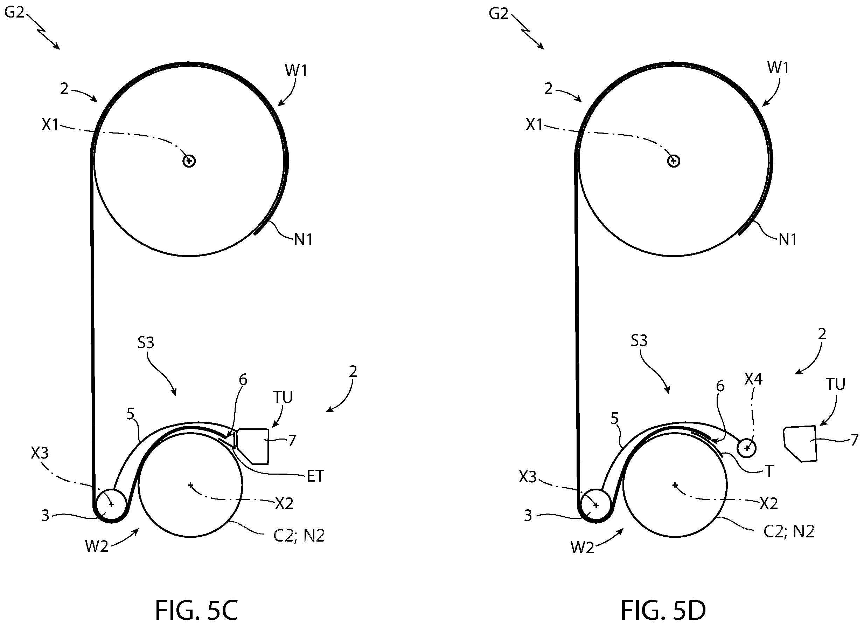

The splicing unit 2 is configured to receive the two webs N1 and N2 from the respective feeding unit and to splice the two webs N1 and N2 by means of an adhesive tape T applied on one of the two webs N1 and N2 (in particular, in the illustrated embodiments, the adhesive tape T is applied on the web N1). The splicing unit 2 comprises a movable deflecting element 3 (also known as "dandy roll"), which is arranged close to the material web N1 and is configured to move along a splicing surface defined by the two material webs N1 and N2 to be spliced, so as to stretch the material web N1 during the splicing of the two webs N1 and N2. The deflecting element 3 is movable (namely varies its relative position, in particular of an axis X3 of its own, over time) with respect to the web N1 and in particular with respect to the two feeding units W1 and W2. In other words, the element 3 is not fixed (in particular, does not have the axis X3 which maintains its position unvaried in the plane and over time). The deflecting element 3 is movable between a disengagement position (illustrated in Figures 4A and 5A), in which the deflecting element 3 is spaced apart from the material web N1 so as not to act on it, and a transfer position (illustrated in Figures 4C and 5D), in which the deflecting element 3 at least partially (in particular completely) engages (acts on) the material web so as to stretch it (tension it), and the adhesive tape T is arranged on the outer surface of the feeding unit W2 (which also defines the splicing surface). In other words, in the transfer position of the deflecting element 3, the material web N1 is stretched and is released on the feeding unit W2 with also the adhesive tape T lying on the outer surface of the feeding unit W2.

Advantageously, but not limitedly, as is illustrated in Figures 1, 4 and 5, the deflecting element 3 comprises a drum configured to rotate around its own axis X3.

Advantageously, but not limitedly, as is illustrated in the accompanying figures, each feeding unit W1 and W2 comprises a conveying drum W1 or W2. In particular, Figure 1 illustrates four conveying drums W1 and W2, namely two drums W1 and two drums W2. The two conveying drums W1 and W2 are configured to rotate around a rotation axis X1 and X2 of their own (which are horizontal and parallel to each other), respectively, and to feed, in the area of a side (circumferential) wall of their own, a material web N1 collected from a coil C1 (schematically illustrated in Figure 1) and a second material web N2 collected from a coil C2 (not illustrated in Figure 1), respectively. The coils C1 and C2 are preferably coils from which the same type of material is to be unwound. In this embodiment, the deflecting element 3 is movable with respect to the axes X1 and X2 of the two feeding units W1 and W2. In particular, the deflecting element 3 is movable in a plane perpendicular (in particular orthogonal) to the axes X1 and X2.

Advantageously, but not limitedly, the drum W2 is a suction drum in order to retain on its surface at least a portion of the web N2 (and preferably also of the web N1) so as to make the splicing.

As illustrated in the figures (which are illustrative and not limiting), the splicing surface is substantially parallel to the outer surface of the feeding unit W2. Therefore, as illustrated in the figures, the splicing surface is curved and the deflecting element 3 is configured to follow an at least partially curved trajectory (namely it performs a rotation), so as to follow the progression of the splicing surface.

According to an alternative embodiment (not illustrated and not limiting), the surface of the unit W2 is flat. Therefore, the splicing surface is flat and the deflecting element 3 is configured to follow an at least partially straight trajectory (namely it performs a translation).

Therefore, the deflecting element 3 is movable with respect to the unit W2 and follows the progression of the outer surface of the unit W2, so as to lay the web N1 on it. The element 3 (in particular its axis X3) does not have a fixed relative position with respect to the respective feeding unit W2, but moves (by means of translation, rotation or possibly also rotation-translation) with respect to it. Preferably, each feeding unit W2 has a respective associated deflecting element 3.

Advantageously, but not limitedly, each deflecting element 3 is connected to a respective guiding element 5, which is configured to move the respective deflecting element 3 so as to make it follow the assigned trajectory.

Advantageously (but not limitedly) in the accompanying figures, the guiding element 5 has two ends opposite each other. The guiding element 5 is hinged (for example to a frame of the apparatus 1) in the area of a first end, so as to rotate around a rotation axis X4 that is parallel to the axes X1-X3; whereas, the deflecting element 3 is connected to it in the area of the opposite end.

Advantageously, each guiding element 5 has a respective rotation axis X4, which are parallel to each other.

According to a possible further embodiment, two guiding elements 5 have the rotation axis X4, which are coaxial with respect to each other.

According to the embodiment illustrated in the accompanying figures (which are exemplifying and not limiting), the guiding element 5 has an annular sector shape and is configured to oscillate around the rotation axis X4 so as to arrange the deflecting element 3 between the disengagement position and the transfer position described in the foregoing.

Preferably, but not limitedly, the adhesive tape T is applied to the coil C1 in an automated manner, for example by means of the application assembly G2, so as to ensure the replicability of the process in terms of both orientation and position of the adhesive tape T.

According to a possible alternative embodiment, the splicing apparatus 1 comprises both assemblies G1 and G2. According to a first alternative, the splicing assembly G1 is manufactured as described in the foregoing; whereas, according to a second alternative, the assembly G1 is of known type. In the latter case, by way of example, the assembly G1 could be manufactured according to what is described in patent application 102023000001485, it too filed by Manz Italy.

The application assembly G2 (if present) is configured to apply the adhesive tape T to a free end (the one that in the following will be indicated by reference numeral 6). In particular, the adhesive tape T is applied on the web N1 or N1* so as to protrude from the free end 6. The protruding portion of the adhesive tape T (the one that in the following is indicated as second portion) is subsequently applied (connected) to another web N2 (not illustrated) in order to perform the splicing. Preferably, the adhesive tape T thus consists of two portions; namely, the first portion that adheres to the web N1 or N1* and the second portion that subsequently adheres to the web N2. Advantageously, but not limitedly, the two portions of the adhesive tape T have the same dimensions (in particular, width and depth). Alternatively, the two portions can have dimensions (in particular, width and depth) which are different with respect to each other.

According to a possible embodiment, illustrated by way of example in Figures 1-3, the application unit G2 comprises a feeding unit W3, an identification unit IU, a providing unit PU and a transfer unit TU, as described in detail in the following.

The feeding unit W3 is configured to feed the material web N1 or N1* collected from the coil C1 or C1.

Advantageously, but not limitedly, the feeding unit W3 comprises a drum configured to rotate around a rotation axis X5 (which is in particular horizontal and parallel to the axes X1-X4) and to feed, in the area of a respective (circumferential) side wall, the material web N1 or N1* collected from the coil C1 or C1*. In actual fact, reference C1 or C1* indicates the coil C1 or C1* when it is arranged in the area of the application assembly G2. Typically, the coil C1 or C1* is a coil which, subsequently to the application of the adhesive tape T and when the coil C2 is almost finished and it results to be necessary to provide for its replacement, is transferred, for example by a loading device (not illustrated), in the area of the feeding unit W1, in order to proceed with the splicing of the webs as described in the foregoing.

Advantageously, but not limitedly, if the feeding unit W3 comprises a drum, then the drum W3 is a suction drum so as to retain the conveyed web N1 or N1* on its surface.

The identification unit UI is configured to identify the free end 6 of the material web N1 or N1* of the coil C1 or C1* on which the adhesive tape T is to be applied. It is highlighted that only a piece of web material N1 or N1* having as initial part the free end 6 is illustrated in the figures. It is understood that the material web N1 or N1* is not limited to only the illustrated piece, but rather comprises a coil C1 or C1* on which a plurality of layers are neatly wound.

The providing unit PU (only schematically illustrated in the accompanying figures) is configured to feed the adhesive tape T to a receiving station S1 of the apparatus 1.

Advantageously, but not limitedly, the providing unit PU is configured to receive, in the receiving station S1, the adhesive tape T fed manually or by means of a feeding device (of known type).

The receiving station S1 is arranged between the unit W3 and the providing unit PU.

The transfer unit TU is configured to acquire at least a portion (in particular the first portion) of the adhesive tape T from the providing unit 4 and to apply the first portion of the adhesive tape T to the free end 6 of the coil C1 or C1* in the area of an application station S2. The application station S2 is arranged downstream of the receiving station S1. In particular, the adhesive tape T is in contact with the transfer unit TU in the area of its non-adhesive side. The transfer unit TU is configured to move from the application station S2, so as to at least partially unwind (in particular at a constant speed) the material web N1 or N1* and lead it to a delivery station S3 (schematically illustrated in Figures 1, 4 and 5). The delivery station S3 is arranged downstream of the application station S2. In the delivery station S3, the free end 6 of the coil C1 or C1* provided with the adhesive tape T is feedable to a following processing unit (in particular, but not necessarily, to the splicing assembly G1).

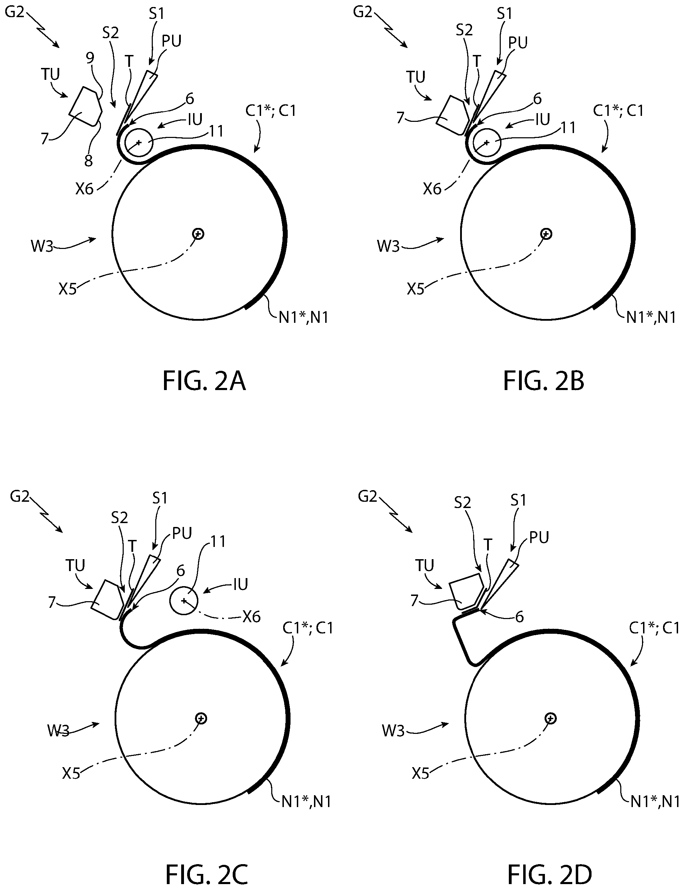

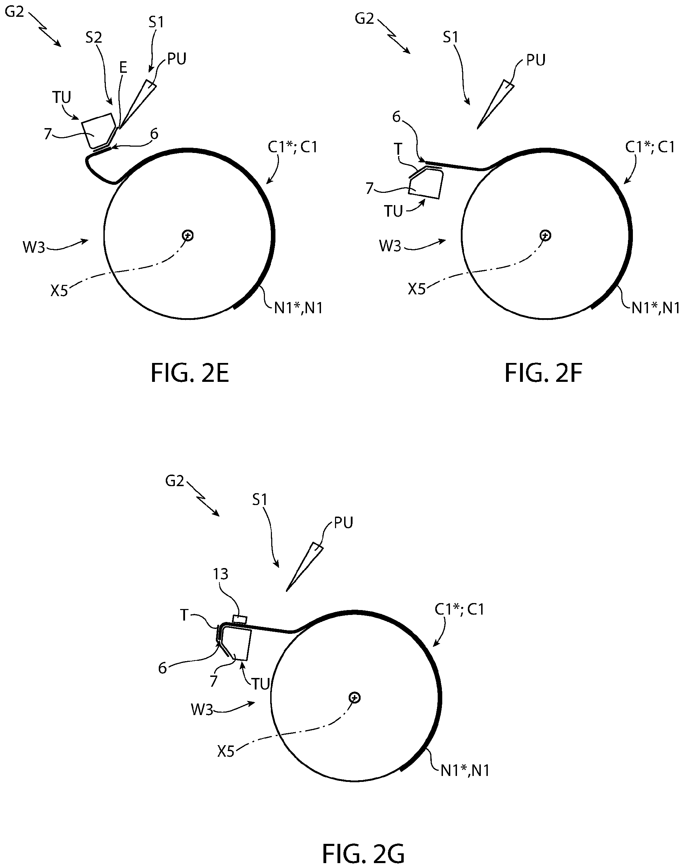

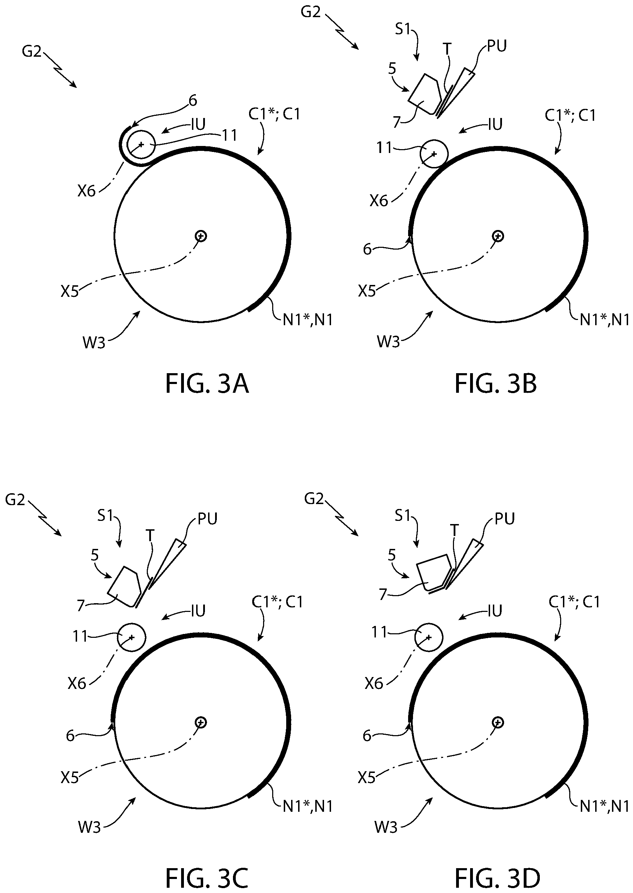

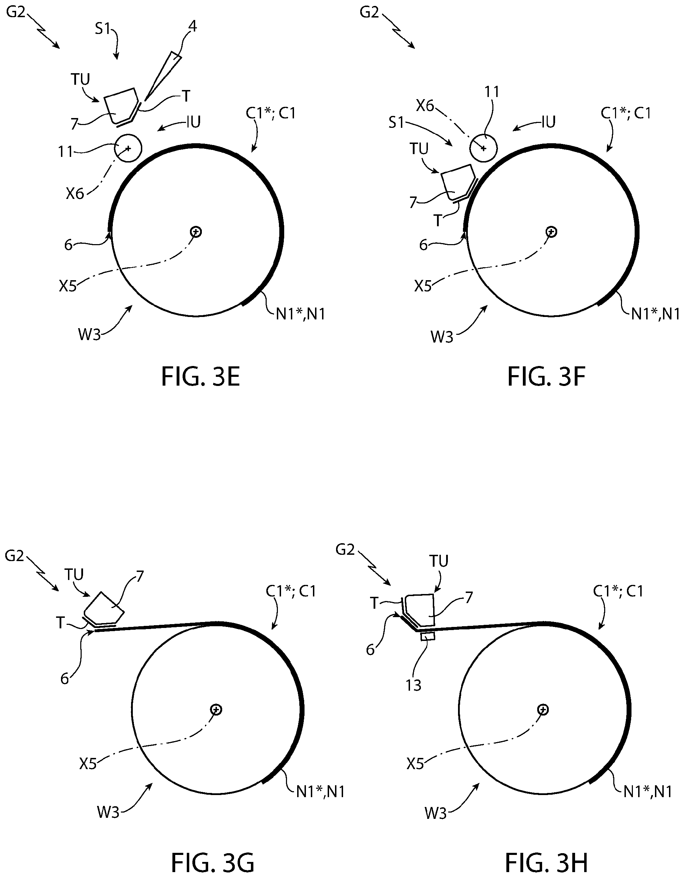

Figures 2 and 3 illustrate in particular two embodiments, which differ from each other in the positioning (in particular on the inner or outer side of the web N1 or N1*) of the adhesive tape T. In other words, since the material web N1 or N1* has an inner surface facing the material layer underneath, and an outer surface opposite the inner surface, Figures 2A-2G illustrate a possible embodiment wherein the transfer unit TU applies the adhesive tape T on the inner surface; whereas, Figures 3A-3H illustrate a possible embodiment wherein the transfer unit TU applies the adhesive tape T on the outer surface.

Advantageously, but not limitedly, the transfer unit TU comprises a retaining element 7 (illustrated in Figures 2-5) .

According to a possible embodiment not illustrated, the retaining element 7 comprises a suction portion, in particular a suction cup.

According to what is illustrated in the accompanying schematic figures, the retaining element 7 has a polygonal-shaped cross section (in particular pentagonal with four sides orthogonal to one another and a fifth transverse side) .

The retaining element 7 is provided with two transfer surfaces 8 and 9, transverse (orthogonal) to each other configured to retain the adhesive tape T.

The retaining element 7 is configured to move between an acquisition position (schematically illustrated in Figures 2B, 2C, 3B, 3C) and a delivery position (schematically illustrated in Figures 4A-4C and 5A-5D). In the acquisition position, the transfer surface 8 receives the portion (first portion) of the adhesive tape T from the providing unit 4, which is in a work position (described in detail in the following). Whereas, in the delivery position the adhesive tape T is applied to the free end 6 of the coil C1 or C1*, the material web N1 or N1* is at least partially unwound (in particular with a constant speed) and the adhesive tape T is arranged in the area of the delivery station S3.

Advantageously, the adhesive tape T is applied by exerting pressure on the adhesive tape T by means of the retaining element 7.

Between the acquisition position and the delivery position, the retaining element 7 occupies a deflecting position (schematically illustrated in Figures 2D and 3D). The deflecting position of the retaining element 7 is between the acquisition position and the delivery position. In the deflecting position, the portion (second portion) of the adhesive tape T is deflected (folded) against the transfer surface 9 of the retaining element 7.

Advantageously, the retaining element 7 has a rotation axis (not illustrated) which is parallel to the rotation axes X1-X5. In particular, between the acquisition position and the deflecting position, the retaining element 7 rotates around its rotation axis in a first direction (in particular clockwise as is illustrated in Figures 2 and 3). Whereas, between the deflecting position and the delivery position, the retaining element 7 rotates around its rotation axis in a second direction, which is opposite the first direction, in the case where the adhesive tape T is applied on the inner surface of the web N1 or N1*, or still in the first direction, in the case where the adhesive tape T is applied on the outer surface.

According to what is illustrated in the accompanying figures (which are not limiting), the identification unit UI comprises an acquisition element 11 and a detection device 12. The acquisition element 11 is mobile (namely, varies its position over time) . The acquisition element 11 is configured to cyclically place itself between a work position (schematically illustrated in Figures 2A, 2B and 3A) and a release position (schematically illustrated in Figures 2C and 3C-3F). In the work position, the acquisition element 11 is in contact with the circumferential surface of the coil C1 or C1* and moves (in particular, rolls or rotates-translates) on it in order to intercept the free end 6 and lift it by winding at least a portion of material web N1 or N1* (in particular, a portion comprising the free end 6) around it. Whereas, in the release position, the acquisition element 11 is spaced apart from the material web N1 so as to be disengaged from it.

According to a possible non-limiting embodiment, the acquisition element 11 is a drum, in particular a suction drum, which is provided with a rotation axis X6 (which is parallel to the rotation axis X1) around which it is set in rotation. The drum 11 comprises a circumferential surface, in the area of which the web N1 or N1* is guided. In other words, in the area of which, in the work position, the drum 11 is at least partially in contact with the coil C1 or C1*. The circumferential surface has a cylindrical or convex shape (namely, by making the longitudinal section parallel to the axis X6, the circumferential surface has a "U" shape with the bend closer to the axis X6 than the remaining part of the surface) or a concave shape (namely, by making the longitudinal section parallel to the axis X6, the circumferential surface has a "U" shape with the bend more spaced apart from the axis X6 than the remaining part of the surface).

Advantageously, but not limitedly, the acquisition element 11 comprises a delimitation element (not illustrated) configured to laterally guide (namely, along a direction that is parallel to the axes X1-X6) the web N1 or N1*, the end 6 of which is acquired in the work position. According to a possible example (which is not limiting), the delimitation element laterally (i.e. along the direction that is parallel to the axes X1-X6) delimits the extension of the surface of the acquisition element 11, which is in contact with the web N1 or N1*, the end 6 of which is acquired in the work position.

In the case where the acquisition element 11 is a drum, the delimitation element laterally (in particular, parallel to the axis X6 of the drum) delimits the circumferential surface. In other words, the delimitation element defines an edge that delimits the circumferential surface of the drum 11, for example in the area of the terminal ends thereof.

According to a possible non-limiting alternative embodiment, the drum 11 has a cylindrical circumferential surface, whereas the delimitation element has a longitudinal section (parallel to the axis X6) that is concave or convex in shape.

According to a possible non-limiting alternative, thanks to its shape (for example concave or convex as described in the foregoing), it is the drum 11 that guides the web N1 or N1*, the end 6 of which is acquired in the work position. In other words, it is the drum 11 which, thanks to the concave or convex shape of the circumferential surface, at least partially defines the delimitation element.

According to a further possible variation (which is not limiting), the acquisition element 11 is configured to be moved, in particular actuated by means of a respective actuator device (not illustrated), in a direction that is parallel to the axes X1-X6, in order to correct deviations (namely divergences from the expected position) of the web N1 or N1* that have been identified by means of the detection device 12.

Advantageously, but not limitedly, the detection device 12 is configured to identify the exact position of the free end 6 of the web N1 or N1* at that given moment (time instant). The detection device 12 is in particular an optical detection device 12 configured to identify the position of the free end 6 of the web N1 or N1*.

Advantageously, but not limitedly, the apparatus 1 also comprises a countering element 13 (Figures 2G and 3H). The countering element 13 is arranged facing one of the surfaces of the transfer unit TU, other than the two transfer surfaces 8 and 9. The countering element 13 is configured to retain the material web N1 or N1* against a further surface (other than the two transfer surfaces 8 and 9) of the retaining element 7, so as to prevent involuntary (even partial) detachments of the adhesive tape T from the retaining element 7 during the handling of the web N1 or N1*.

Advantageously, but not limitedly, the apparatus 1 comprises a suction air source (not illustrated) configured to feed the sucked air to the suction units 11, W2, and W3.

Advantageously, but not limitedly, the apparatus 1 comprises a removal device for removing the core of the finished coil. The removal device is configured to remove the core of the previous coil from the feeding unit W1 before the new coil C1 to be spliced is loaded onto the feeding unit W1. The removal device is in particular configured to remove the core and throw it away in a specially provided container so that it can be subsequently disposed of and/or recycled.

According to a further aspect of the present invention, an automated machine (not illustrated) is provided for the production of power storage devices comprising the aforementioned apparatus 1.

Advantageously, the automated machine comprises an electronic control unit ECU which supervises the operation of the entire machine and thus the operation of the apparatuses, among which the apparatus 1, which compose the machine. For example, the control unit ECU is an industrial PC or a PCL combined with a motion controller.

Advantageously, the machine comprises further apparatuses or units which receive the coil C1, C1* or C2 from the apparatus 1 and carry out processing operations such as, for example, the cutting and the stacking or the winding. Therefore, the machine comprises, besides the splicing assembly G1 (of known type or according to what described thus far) for splicing the two material webs N1 and N2 for the production of power storage devices and/or the application unit G2, also further apparatuses or units for the production of power storage devices.

According to an additional aspect of the present invention, a method for splicing two webs N1 and N2, in particular by means of the apparatus 1, is provided.

Advantageously but not limitedly, the method is carried out by the splicing apparatus 1 and/or the automated machine described in the foregoing.

In the following, the mode with which the splicing apparatus 1 splices the two webs N1 and N2 and/or provides at least one of the two webs (in particular the web N1) with an adhesive tape T is described.

According to a possible embodiment, the method mainly (but not exclusively) comprises the steps of:
- providing the two material webs N1 collected from a respective coil C1 or C2;
- splicing the two webs N1 and N2 by means of a splicing unit 2 of the splicing assembly G1 and configured to splice the two webs N1 and N2 by means of the adhesive tape T; and
- moving a deflecting element 3 of the splicing unit 2, which is movable and is arranged close to the material web N1, along the splicing surface defined by the two material webs to be spliced, so as to stretch the material web during the splicing of the two webs N1 and N2. The deflecting element 3 is moved between: the disengagement position, in which the deflecting element 3 is spaced apart from the material web, and the transfer position, in which the deflecting element 3 at least partially engages the material web N1 so as to at least partially stretch it (tension it) when the web N1 is released onto the feeding unit W2.

Advantageously, but not limitedly, the step of moving the deflecting element 3 provides for moving it along an at least partially straight trajectory.

Advantageously, but not limitedly, the step of moving the deflecting element 3 provides for moving it along an at least partially curved trajectory.

According to a possible embodiment, the method also comprises, in addition or as an alternative to the steps indicated above, the following steps of:
- feeding the material web N1 or N1* collected from the coil C1 or C1* by means of the acquisition element 11, which is configured to acquire, in the area of a respective side wall, the material web N1 or N1*;
- identifying the free end 6 of the material web N1 or N1* by means of the identification unit IU;
- feeding the adhesive tape T to the receiving station S1 of the apparatus 1;
- acquiring at least a portion (first portion) of the adhesive tape T fed by the providing unit PU by means of the transfer unit TU arranged in the area of the application station S2;
- applying the portion (first portion) of the adhesive tape T to the free end 6 of the web N1 or N1* by means of the transfer unit TU; and
- delivering in the area of the delivery station S3, arranged downstream of the application station S2, the material web N1 or N1* provided with the adhesive tape T, by moving the transfer unit TU so as to at least partially unwind it (in particular at a constant speed).

Advantageously, but not limitedly, the method comprises the further steps (in particular the step concerning the identification of the free end 6 comprises the following sub-steps) of cyclically arranging the acquisition element 11 of the detection unit 3 (provided with the rotation axis X6 which is parallel to the rotation axis X1) between the work position and the release position. In the work position, the acquisition element 11 is in contact with the circumferential surface of the coil C1 or C1* and rolls, in particular rotates-translates, on it in order to intercept the free end 6 and lift it by winding at least a portion of material web N1 or N1* around it. Whereas, in the release position, the acquisition element 11 is spaced apart from the material web N1 or N1* so as to be disengaged from the it.

Advantageously, but not limitedly, the method comprises a step of laterally guiding (namely, along a direction that is parallel to the axes X1-X6) the web N1 or N1*, the end 6 of which is acquired in the work position by means of the delimitation element. In addition, the method comprises the further step (in particular the step concerning the identification comprises the following sub-step) of identifying the position of the free end 6 of the web N1 or N1* by means of the detection device 12 of the identification unit IU.

Advantageously, but not limitedly, the method comprises the further step (in particular the identification step comprises the following sub-step) of moving the acquisition element 11, in particular by means of the respective actuator device (not illustrated), in a direction that is parallel to the axes X1-X6, in order to correct deviations (namely, divergences from the expected position) of the web N1 or N1*, which have been identified by means of the detection device 12.

Referring to Figures 2A-2G, in which the adhesive tape T is applied to an inner surface of the material web N1 or N1*, the method further comprises the steps of:
- moving the retaining element 7 of the transfer unit TU, which is provided with the two transfer surfaces 8 and 9, which are transverse to each other and configured to retain the adhesive tape T, to an acquisition position, in which the transfer surface 8 receives the portion (first portion) of the adhesive tape T from the providing unit 4, which is in the work position;
- subsequently moving the acquisition element 11 to the release position;
- moving the retaining element 7, at first, to the deflecting position between the work position and the delivery position, in which the portion (second portion) of the adhesive tape T is deflected against the transfer surface 9 of the retaining element 7; and
- subsequently moving the retaining element 7 to the delivery position, in which the adhesive tape T is applied to the free end 6 of the coil C1 or C1*, the material web N1 or N1* is at least partially unwound, and the adhesive tape T is arranged in the area of the delivery station S3.

Advantageously, but not limitedly, the method also comprises the steps of:
- rotating the retaining element 7 around its rotation axis, in the first direction between the work position and the deflecting position; and
- rotating the retaining element 7 around its rotation axis, in the second direction (which is opposite the first direction) between the deflecting position and the delivery position.

Referring to Figures 3A-3H, in which the adhesive tape T is applied on an outer surface of the material web N1 or N1*, the method further comprises the steps of:
- unwinding the portion of material web N1 or N1* wound around the identification unit IU (in particular the acquisition element 11), preferably holding the acquisition element 11 in contact with the material web N1 or N1*;
- moving the retaining element 7 of the transfer unit TU, which is provided with the two transfer surfaces 8 and 9, transverse to each other and configured to retain the adhesive tape T, to the acquisition position, in which the transfer surface 8 receives the portion (first portion) of the adhesive tape T from the providing unit PU;
- moving the retaining element 7, at first, to the deflecting position comprised between the work position and the delivery position, in which the portion (second portion) of the adhesive tape T is deflected against the transfer surface 9 of the retaining element 7; and
- subsequently moving the retaining element 7 to the delivery position, in which the adhesive tape T is applied to the free end 6 of the coil C1 or C1*, the material web N1 or N1* is at least partially unwound, and the adhesive tape T is arranged in the area of the delivery station S3.

Advantageously, but not limitedly, the method comprises the further steps of:
- rotating the retaining element 7 around the rotation axis in the first direction between the work position and the deflecting position.

According to a possible embodiment, the method additionally also comprises the steps of:
- moving the retaining element 7, in particular along a first direction; and
- subsequently moving the retaining element 7, in particular along a second direction, which is transverse to the first direction, to the delivery position.

Advantageously, but not limitedly, the method also comprises the further step of rotating the retaining element 7, which is in the delivery position, around its rotation axis and in the first rotation direction.

Advantageously, but not limitedly, the method comprises a further step of removing by means of a removal device the core of the finished coil before the new coil C1 or C1* to be spliced is loaded onto the feeding unit W1.

The apparatus 1, the machine and the method described above have numerous advantages.

First of all, the apparatus 1 has the advantage of splicing the two webs N1 and N2 quickly and with high precision. Additionally, the apparatus 1 has the advantage that (if the application assembly G2 is present) it applies the adhesive tape T on the web (in particular the web N1) in a precise manner (both in terms of orientation and positioning). In other words, the application of the adhesive tape T is replicable over time for each coil C1.

It follows that the webs spliced with adhesive tape T applied by the apparatus 1 have a splicing that is stronger and more resistant over time.

The apparatus 1 and the method described thus far also have the advantage of allowing increasing the application speed of the adhesive tape T. Therefore, the apparatus 1 has the advantage of allowing increasing the productivity of the automated production machine ensuring a high degree of precision.

### LIST OF THE REFERENCE NUMERALS OF THE FIGURES

- 1: splicing apparatus
- 2: splicing unit
- 3: deflecting element
- 4: providing unit
- 5: guiding element
- 6: free end
- 7: retaining element
- 8: transfer surface
- 9: transfer surface
- 11: acquisition element
- 12: detection device
- 13: countering element
- C1: coil
- C1*: coil
- C2: coil
- T: adhesive tape
- G1: splicing assembly
- G2: application assembly
- W1: feeding unit
- W2: feeding unit
- W3: feeding unit
- N1*: material web
- N1: material web
- N2: material web
- UI: identification unit
- PU: providing unit
- TU: transfer unit
- S1: receiving station
- S2: application station
- S3: splicing station
- X1: axis
- X2: axis
- X3: axis
- X4: axis
- X5: axis
- X6: axis

## Claims

1. A splicing apparatus (1) for splicing two material webs (N1, N2) for the production of power storage devices provided with a splicing assembly (G1) comprising:
at least two feeding units (W1, W2), each configured to feed a respective material web (N1, N2); and
a splicing unit (2) configured to receive the two material webs (N1, N2) and to splice the two webs (N1, N2) by means of an adhesive tape (T) applied on one of the two webs (N1, N2) ;
the splicing unit (2) comprising a movable deflecting element (3), which is arranged close to the first material web (N1) and is configured to move along a splicing surface defined by the two material webs to be spliced, so as to stretch the first material web during the splicing of the two webs (N1, N2) ;
the deflecting element (3) being movable between a disengagement position, in which the deflecting element (3) is spaced apart from the first material web, and a transfer position, in which the deflecting element (3) at least partially engages the first material web (N1) so as to at least partially stretch it when the web (N1) is released onto the second feeding unit (W2).

2. The splicing apparatus (1) according to claim 1, wherein:
a) the deflecting element (3) comprises a drum or a roller; preferably, wherein the splicing surface is flat and the deflecting element (3) is configured to follow an at least partially straight trajectory.
b) each feeding unit (W1, W2) comprises a conveying drum (W1, W2) configured to respectively rotate around a rotation axis (X1, X2) of its own and to feed, in the area of a side wall of its own, the respective material web (N1, N2), preferably wherein the splicing surface is curved and the deflecting element (3) is configured to follow an at least partially curved trajectory.

3. The splicing apparatus (1) according to claim 1 or 2, and comprising an application assembly (G2) configured to apply the adhesive tape (T) on one of the webs, preferably on the first web (N1, N1*); wherein the application assembly comprises, in turn:
a third feeding unit (W3) configured to feed the first material web (N1, N1*);
an identification unit (IU) configured to identify a free end (6) of the web (N1, N1*) fed by the third feeding unit (W3) at which the adhesive tape (T) is to be applied;
a providing unit (PU) for providing an adhesive tape (T) configured to provide the adhesive tape (T) to a receiving station (S1) of the apparatus (1) and arranged between the third feeding unit (W3) and the providing unit (PU); and
a transfer unit (TU) configured to acquire at least a first portion of the adhesive tape (T) fed by the providing unit (PU) and to apply a first portion of the adhesive tape (T) to the free end (6) of the first coil (C1) in the area of an application station (S2); the transfer unit (TU) is further configured to move from the application station (S2) to a delivery station (S3), so as to at least partially unwind the first material web (N1, N1*) and lead it to the delivery station (S3), which is arranged downstream of the application station (S2), wherein the free end (6) provided with the adhesive tape (T) is feedable to a following processing unit.

4. The apparatus (1) according to any one of the preceding claims, wherein the identification unit (IU) comprises:
an acquisition element (11) configured to acquire the material web (N1, N1*) and to cyclically place itself between:
a work position, in which the acquisition element (11) is in contact with the circumferential surface of the coil (C1, C1*) and rolls, in particular rotates-translates, on it in order to intercept the free end (6) and lift it by winding at least a portion of the first material web (N1, N1*) around it; and
a release position, in which the acquisition element (11) is spaced apart from the first material web (N1, N1*) so as to be disengaged from it; and
a detection device (12), in particular an optical detection device, configured to identify the position of the free end (6) of the first web (N1, N1*).

5. The apparatus (1) according to claim 4, wherein:
a) the acquisition element (11) is a drum comprising a circumferential surface, in the area of which the first web (N1, N1*) is guided; and wherein the circumferential surface has a circumferential surface with a cylindrical or concave or convex shape; and/or
b) the acquisition element (11) comprises a delimitation element configured to laterally guide, in particular along a direction that is parallel to the first axis (X1), the first web (N1, N1*); and/or
c) the acquisition element (11) is configured to be moved in a direction that is parallel to the first axis (X1) in order to correct deviations of the first web (N1, N1*), which were identified, in particular by means of the detection device (12) .

6. The apparatus (1) according to any one of the preceding claims, wherein the first material web (N1, N1*) has an inner surface, which faces the material layer underneath, and an outer surface opposite the inner surface; and the transfer unit (TU) applies the adhesive tape (T) on the inner or outer surface of the first material web (N1, N1*).

7. The apparatus (1) according to any one of the preceding claims, wherein:
a) the transfer unit (TU) comprises a retaining element (7), in particular comprising a suction portion, in particular a suction cup, provided with two transfer surfaces (8, 9), which are transverse to each other and are configured to retain the adhesive tape (T); the retaining element (7) is configured to move between:
an acquisition position, in which the first transfer surface (8) receives a first portion of the adhesive tape (T) from the providing unit (PU), which is in the work position; and
a delivery position, in which the adhesive tape (T) is applied to the free end (6) of the coil (C1, C1*), the first material web (N1, N1*) is at least partially unwound and the adhesive tape (T) is arranged in the area of the delivery station (S3); and/or
b) a countering element (13), which faces a third surface of the transfer unit (TU) other than the two transfer surfaces (8, 9) and is configured to retain the first material web (N1, N1*) against the third surface of the retaining element (7)

8. The apparatus (1) according to claim 7, wherein:
a) in a deflecting position of the retaining element (7), which is comprised between the acquisition position and the delivery position, a second portion of the adhesive tape (T) is deflected against the second transfer surface (9) of the retaining element (7); and/or
b) the retaining element (7) has a fourth rotation axis, which is parallel to the first rotation axis (X1); wherein:
between the work position and the deflecting position, the retaining element (7) rotates around the fourth rotation axis in a first direction; and
between the deflecting position and the delivery position, the retaining element (7) rotates around the fourth rotation axis in a second direction, which is opposite the first direction, or still in the first direction.

9. A machine for the production of power storage devices comprising a splicing apparatus (1) according to one of the claims from 1 to 8.

10. A splicing method for splicing two material webs for the production of power storage devices comprising the steps of:
providing two material webs (N1, N2);
splicing the two webs (N1, N2) by means of a splicing unit (2) of the splicing assembly (G1) by means of an adhesive tape (T); and
moving a deflecting element (3) of the splicing unit (2), which is movable and is arranged close to the first material web (N1), along a splicing surface defined by the two material webs to be spliced, so as to stretch the first material web during the splicing of the two webs (N1, N2);
wherein the deflecting element (3) is moved between a disengagement position, in which the deflecting element (3) is spaced apart from the first material web, and a transfer position, in which the deflecting element (3) at least partially engages the first material web (N1) so as to at least partially stretch it when the web (N1) is released onto the second feeding unit (W2).

11. The method according to claim 10, wherein:
a) the step of moving the deflecting element (3) comprises the step of moving the deflecting element (3) along an at least partially straight trajectory or at least partially curved trajectory; and/or
b) the method comprises the further steps of:
b1) identifying the free end (6) of the first material web (N1, N1*) of the first coil (C1, C1*) to be spliced by means of an identification unit (IU);
b2) providing the adhesive tape (T) in the area of a receiving station (S1) of the apparatus (1);
b3) acquiring at least a first portion of the adhesive tape (T) fed by the providing unit (PU) by means of a transfer unit (TU) arranged in the area of the application station (S2); preferably wherein the adhesive tape (T) is fed to the providing unit (PU) manually or by means of a feeding device;b4) applying a first portion of the adhesive tape (T) to the free end (6) of the first coil (C1, C1*) by means of the transfer unit (TU); and
b5) moving the transfer unit (TU) from the application station (S2) to a delivery station (S3), so as to at least partially unwind the first material web (N1, N1*) and lead it to the delivery station (S3), which is arranged downstream of the application station (S2), wherein the free end (6) provided with the adhesive tape (T) is feedable to a following processing unit.

12. The method according to claim 11, comprising the further steps of
a) cyclically arranging an acquisition element (11), which is configured to acquire the material web (N1, N1*), between:
a work position, in which the acquisition element (11) is in contact with the circumferential surface of the first coil (C1, C1*) and rolls, in particular rotates-translates, on it in order to intercept the free end (6) and lift it by winding at least a portion of the first material web (N1, N1*) around it; and
a release position, in which the acquisition element (11) is spaced apart from the first material web (N1, N1*) so as to be disengaged from it; and
identifying the position of the free end (6) of the first web (N1, N1*), in particular by means of a detection device (12) of the identification unit (IU); and/or
b) moving the acquisition element (11) in a direction that is parallel to the first axis (X1) in order to correct deviations of the first web (N1, N1*), which were identified by means of the detection device (12); and/or c) wherein the first material web (N1, N1*) has an inner surface, which faces the material layer underneath, and an outer surface opposite the inner surface; and wherein the method comprising the step of applying the adhesive tape (T) on the inner or outer surface of the first material web (N1, N1*) by means of the transfer unit (TU).

13. The method according to claim 12, wherein:
a) the adhesive tape (T) is applied on the inner surface of the first material web (N1, N1*); the method comprises the further steps of:
a1) moving a retaining element (7) of the transfer unit (TU), which is provided with two transfer surfaces (8, 9), which are transverse to each other and are configured to retain the adhesive tape (T), to an acquisition position, in which the first transfer surface (8) receives a first portion of the adhesive tape (T) from the providing unit (PU), which is in the work position;
a2) subsequently moving the acquisition element (11) to the release position; and
a3) moving the retaining element (7), at first, to a deflecting position comprised between the work position and the delivery position, in which the second portion of the adhesive tape (T) is deflected against the second transfer surface (9) of the retaining element (7); and subsequently moving the retaining element (7) to a delivery position, in which the adhesive tape (T) is applied to the free end (6) of the coil (C1, C1*), the first material web (N1, N1*) is at least partially unwound and the adhesive tape (T) is arranged in the area of the delivery station (S3); ans/or b) the retaining element (7) has a fourth rotation axis, which is parallel to the first rotation axis (X1); the method comprises the further sub-steps of:
b1) rotating the retaining element (7) around the fourth rotation axis and in a first direction between the work position and the deflecting position; and
b2) rotating the retaining element (7) around the fourth rotation axis and in a second direction, which is opposite the first direction, between the deflecting position and the delivery position.

14. The method according to claim 12, wherein:
a) the adhesive tape (T) is applied on the outer surface of the first material web (N1, N1*); the method comprises the further steps of:
a1) unwinding the portion of the first material web (N1, N1*) wound around the acquisition element (11), preferably holding the acquisition element (11) in contact with the first material web (N1, N1*);
a2) moving a retaining element (7) of the transfer unit (TU), which is provided with two transfer surfaces (8, 9), which are transverse to each other and are configured to retain the adhesive tape (T), to an acquisition position, in which the first transfer surface (8) receives a first portion of the adhesive tape (T) from the providing unit (PU);
a3) moving the retaining element (7), at first, to a deflecting position comprised between the work position and the delivery position, in which the second portion of the adhesive tape (T) is deflected against the second transfer surface (9) of the retaining element (7); and subsequently moving the retaining element (7) to a delivery position, in which the adhesive tape (T) is applied to the free end (6) of the coil (C1, C1*), the first material web (N1, N1*) is at least partially unwound and the adhesive tape (T) is arranged in the area of the delivery station (S3).

15. The method according to claim 14, comprising the further steps of:
a) moving the retaining element (7), in particular along a first direction; and subsequently moving the retaining element (7), in particular along a second direction, which is transverse to the first direction, to the delivery position; and/or
b) rotating the retaining element (7), which is in the delivery position, around the fourth rotation axis and in the first rotation direction.
